(19) Europäisches Patentamt
European Patent Office
Office européen des brevets

(11) **EP 2 201 564 B1**

(12) **EUROPEAN PATENT SPECIFICATION**

(45) Date of publication and mention
of the grant of the patent:
**03.12.2014 Bulletin 2014/49**

(21) Application number: **08837260.2**

(22) Date of filing: **10.10.2008**

(51) Int Cl.:
*G10L 15/20* (2006.01)      *G01S 3/809* (2006.01)
*G10L 21/02* (2013.01)      *H04R 3/00* (2006.01)

(86) International application number:
**PCT/KR2008/005969**

(87) International publication number:
**WO 2009/048291 (16.04.2009 Gazette 2009/16)**

(54) **ENHANCED SOUND SOURCE LOCALIZATION SYSTEM AND METHOD BY USING A MOVABLE MICROPHONE ARRAY**

VERBESSERTES SCHALLQUELLENORTUNGSSYSTEM UND VERFAHREN MITTELS VERWENDUNG EINER BEWEGLICHEN MIKROFONANORDNUNG

PROCÉDÉ ET SYSTÈME AMÉLIORÉS DE LOCALISATION DE SOURCE SONORE AU MOYEN D'UN ENSEMBLE DE MICROPHONES MOBILES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **10.10.2007 KR 20070102220**

(43) Date of publication of application:
**30.06.2010 Bulletin 2010/26**

(73) Proprietor: **The Industry & Academic Cooperation in Chungnam National University (IAC)**
**Yuseong-gu**
**Daejeon 305-764 (KR)**

(72) Inventors:
• **CHOI, Jong-Soo**
  **Daejeon 305-761 (KR)**
• **RHEE,Wook**
  **Gunsan-si**
  **Jeonbuk 573-080 (KR)**

(74) Representative: **Banzer, Hans-Jörg**
**Kraus & Weisert**
**Patentanwälte PartGmbB**
**Thomas-Wimmer-Ring 15**
**80539 München (DE)**

(56) References cited:
WO-A1-03/079486       JP-A- 58 162 878
KR-A- 20030 077 797    KR-A- 20040 079 085

• "Direction-of-arrival estimation algorithms ED - Liberti J C; Rappaport T S", 1 January 1999 (1999-01-01), SMART ANTENNAS FOR WIRELESS COMMUNICATIONS: IS-95 AND THIRD GENERATION CDMA APPLICATIONS, PRENTICE HALL PTR, US, PAGE(S) 253 - 272, XP009135979, ISBN: 978-0-13-719287-8 * page 253 - page 255 *
• RHEE WOOK ET AL.: 'Study for Visualization of Rotating Sound Source Using Microphone Array' TRANSACTION OF THE KOREA SOCIETY FOR NOISE AND VIBRATION ENGINEERING vol. 16, no. 6, January 2006, pages 565 - 573
• 'The Korea Society for Noise and Vibration Engineering, 2005 fall conference', November 2005 article RHEE WOOK ET AL.: 'Study on De-Dopplerization Technique for Rotating Source Localization', pages 200 - 204

**Description**

[Technical Field]

The present invention relates to an enhanced sound source localization system and method by using a movable microphone array.

Sound characteristics of various products, such as automobiles and electric home appliances, are recognized as main performance indicators. From this reason, efforts for more quiet products continuously made from the beginning of their development stage. For the noise reduction of product, a method is generally used as follow. In first, it is found where sound is generated from and what cause of that sound. And then, through the design change of product, low noise product can be developed. To this end, a measuring method for localizing a sound source is primarily required.

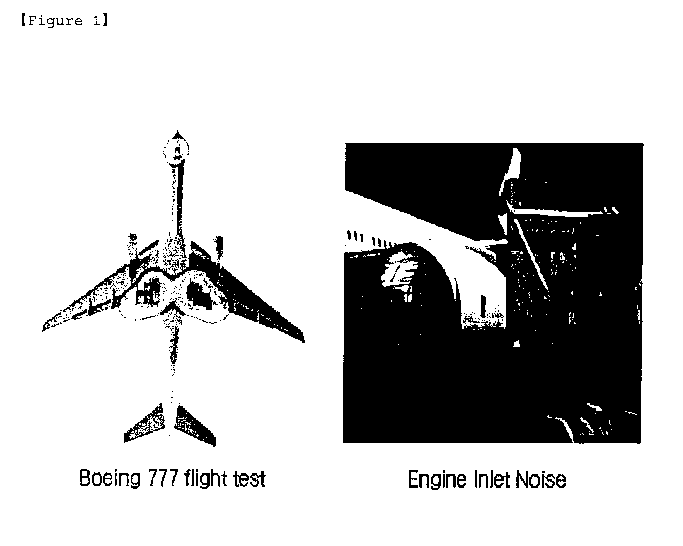

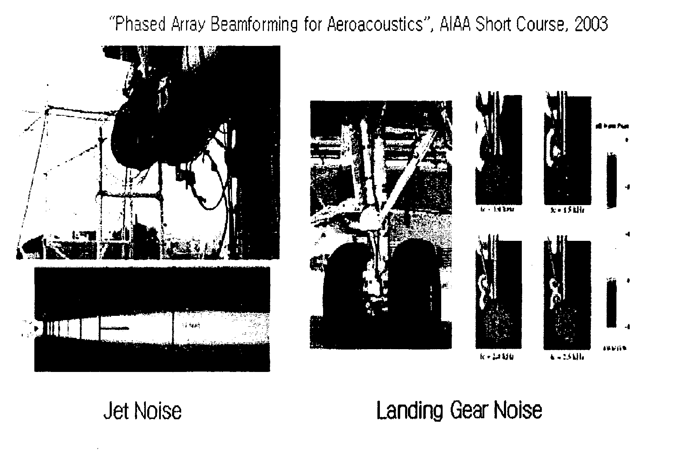

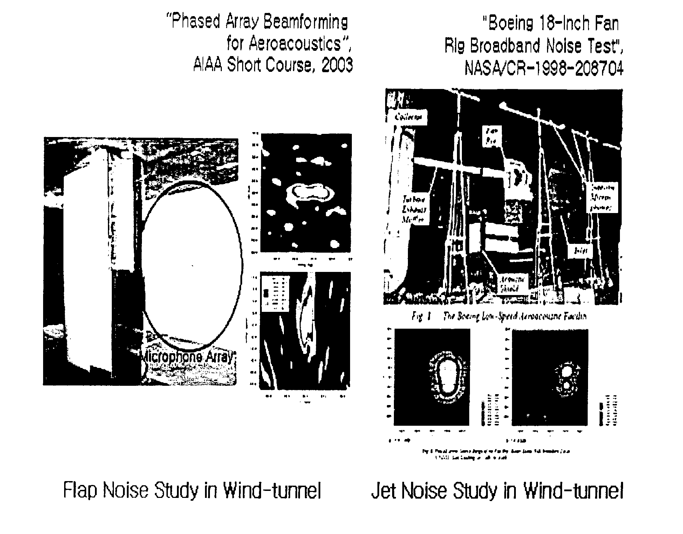

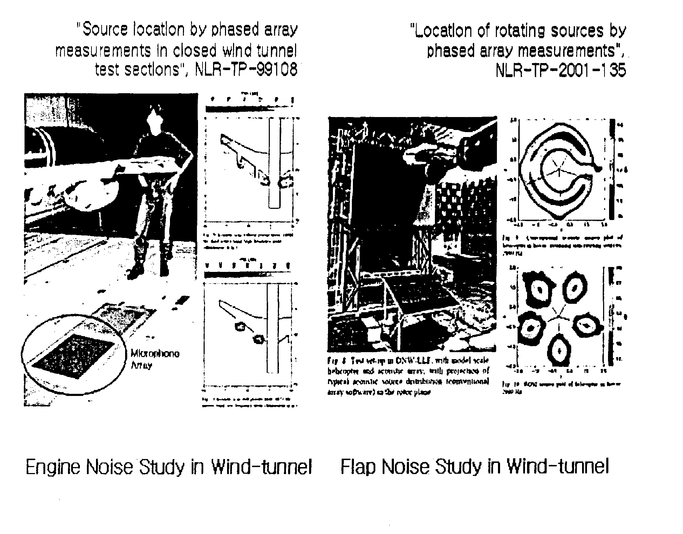

Currently, there are two available source localizing method, one is a sound intensity measuring method using an intensity probe and the other is a sound source localization method using a microphone array beamforming method. Fig. 1 illustrates examples of a microphone array measuring method applied to various types of research and development. In the microphone array method which has recently been developed, several microphones are used for measuring sensors, and the power distribution of a sound source in a space is calculated through the signal processing using a phase difference of measured signal based on distances between a sound source and the measuring sensors. Then, from the distribution map, the location of maximum strength of power can be accepted as a sound source location. In this microphone array method, the measurement accuracy depends on the number of sensors in used. It is known that larger number of sensors give more accurate results.

[Background Art]

In a conventional microphone array beamforming method, the procedure of sound source localization is as follows.

1) Sound waves u(t) generated from a sound source are measured using a plurality of microphones. Then, a cross spectrum matrix having cross spectra $A_{ij}$ between i-th and j-th microphones, defined by the following Equation 1, is calculated using a frequency analysis. At this time, an ensemble average is taken to improve measurement accuracy. The ensemble averaged cross spectrum matrix is referred to as <A>.

$$A_{ij} = \frac{1}{T} \int_0^T u_i(t) u_j^*(t) dt$$

2) A steering vector which can be defined differently depending on wave propagation characteristics is used to apply the microphone array beamforming method. The steering vector is calculated from positions of a sound source and measuring sensors. In the case of sound source which has square wave propagation characteristics, the steering vector between m-th sound source and n-th measuring sensor is defined by the following Equation 2. The matrix having steering vectors of all the sensors from the m-th sound source, calculated as described above, is designated by a steering vector matrix $\overrightarrow{C_m}$.

$$C_{nm} = \alpha \frac{e^{jk_0 r_{nm}}}{r_{nm}}$$

Where, $\alpha = \dfrac{1}{\sqrt{\sum_{n=1}^{N} r_{nm}^2}}$, $k_0 = 2\pi f/c$, and $r_{nm}$ denotes a distance from the m-th sound source to the n-th sound source.

3) Using the cross spectra and steering vector matrix obtained through measurement, the beam power map that means the intensity distribution of a sound source in a space can be evaluated as follows. A beam power $b_m$ at the m-th sound source can be calculated by the following Equation 3.

$$b_m = \overrightarrow{C_m}^\dagger \langle A \rangle \overrightarrow{C_m}$$

At this time, $\overrightarrow{C_m}$ is a Hermitian conjugate. Accordingly, in order to calculate the beam power map, a grid of virtual sound source is determined at an expected location of that sound source, and beam powers at each grid point are calculated. Then, the calculated beam powers are shown in a space, thereby obtaining a beam power map.

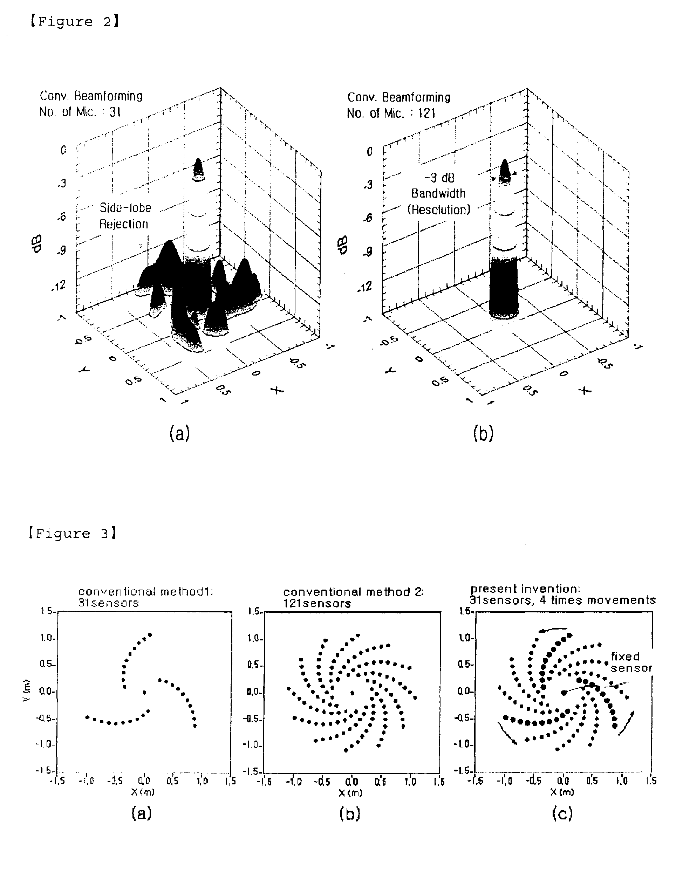

The measurement accuracy in a microphone array measuring system is depending on the number and relative location of sensors in used. It can be quantitatively evaluated by a beam width and a side-lobe rejection, which are defined as follows. When a single sound source exists in a space, a beam power map can be obtained by the arrangement of microphones used in measurement as shown in Fig. 2. At this time, a beam width is defined by a width of a beam in the space at a point corresponding to a level of -3dB from a main lobe corresponding to the position of the sound source. A side-lobe rejection is defined by a level difference between side and main lobes, shown in a position at which the sound source does not exist. Therefore, accurate measurement system requires narrow beam width and high side-lobe rejection capability. Fig. 2 illustrates an accuracy difference in a microphone array measuring system depending on the number of sensors used. 31 sensors are used in Fig. 2(a), and 121 sensors are used in Fig. 2(b). As shown in Fig. 2, it can be seen that the performance is improved as the number of sensors used is increased.

The reason why a large number of sensors are required in the conventional method is that if the numbers of signal measured at different position is increased, the noise signal is attenuated more by summing up the measured signals, and therefore, performance is improved. Sound signals at different location can be measured by moving microphone array with a small number of sensors. However, in the beamforming method, a beam power map requires simultaneously measured signals form all the sensors being used. This is because a phase difference between the respective measured signals, i.e., a difference of times at which a sound signal reaches the respective sensors, is applied to the beamforming method.

Accordingly, in a measuring method using the conventional beamforming method, only the number of sensors is increased to improve its performance. Since the price of measuring sensors and data obtaining devices is very high, there is limitation in increasing the number of sensors. Therefore, it has been continuously required by those skilled in the art to develop a measuring method capable of improving measuring performance and saving costs.

JP 58 162878 A, which serves as basis for the preamble of the independent claims, discloses a radio wave device in which an antenna rotates mechanically and simultaneously forms several beams.

[Disclosure]

[Technical Problem]

An object of the present invention is to provide an enhanced sound source localization system and method by using a movable microphone array, wherein a sound source is measured by moving a limited number of microphones, and a signal processing method capable of synchronizing the microphones, so that measurement accuracy can be improved. More specifically, the present invention provides an enhanced sound source localization system and method by using a movable microphone array, wherein one fixed sensor is used, and sound data is obtained at a larger number of measuring points by allowing the other sensors to be moved, so that independently measured signals can be corrected as simultaneously measured signals by applying a synchronizing method using a signal of the fixed sensor.

[Technical Solution]

According to the invention, a system and method as defined by the independent claims are provided. The dependent claims define embodiments.

According to an aspect of the present invention, there is provided an enhanced sound source localization system by using a microphone array beamforming method, which includes: a fixed sensor measuring a sound at a fixed point; a plurality of movable sensors spaced apart from the fixed sensor at a predetermined distance to measure the sound at a plurality of measuring points while moving along a predetermined path about the fixed sensor; and an analyzer receiving sound data measured from the fixed sensor and the movable sensors to perform data analysis, wherein a measured result is obtained by synchronizing the sound data measured from the plurality of movable sensors with the sound data measured from the fixed sensor.

According to another aspect of the present invention, there is provided an enhanced sound source localization method by using the aforementioned sound source localization system, which includes the steps of: a) the analyzer obtaining an ensemble averaged cross spectrum matrix by using sound data measured from the one fixed sensor and the plurality of movable sensors; b) the analyzer repeating a predetermined times (K) an operation of moving the movable sensors to new positions, re-measuring sound data and obtaining an ensemble averaged cross spectrum matrix ($<A_{i,j,k}>$) using the sound data; c) the analyzer correcting a difference of phases in the ensemble averaged cross spectrum matrix ($<A_{i,j,k}>$), thereby obtaining a synchronized cross spectrum matrix ($<A'_{i,j,k}>$); d) the analyzer rearranging the synchronized cross spectrum matrix ($<A'_{i,j,k}>$) as a cross spectrum matrix ($<A''_{a,b}>$) at independent positions; e) the analyzer obtaining unknown terms in the cross spectrum matrix ($<A''_{a,b}>$) at independent positions by using characteristics of the cross spectrum matrix; and f) the analyzer obtaining a synchronized beam power ($b''_m$) by using the cross spectrum matrix ($<A''_{a,b}>$) at independent positions and a synchronized steering vector matrix ($\overrightarrow{C''_m}$).

In the step c), the analyzer may obtain the synchronized cross spectrum matrix by using the following equation;

$$\left\langle A'_{i,j,k} \right\rangle = \frac{\left\langle A_{i,j,k} \right\rangle}{\left\langle A_{1,1,k} \right\rangle} \left\langle A_{1,1,1} \right\rangle$$

Here, $i$ and $j$ denote sensor numbers and are variables each having an integer between 1 to $N$ when assuming that the total number of the fixed sensor and the plurality of movable sensors is $N$, and $k$ denotes a measuring time and is a variable having an integer between 1 to $K$.

In the step e), the analyzer may obtain the unknown terms in the cross spectrum matrix ($<A''_{a,b}>$) at independent positions by using the following equation;

$$\left\langle A''_{a,b} \right\rangle = \left\langle X^*_a \right\rangle \left\langle X_b \right\rangle$$

$$= \frac{\left\langle X^*_a \right\rangle \left\langle X_a \right\rangle}{\left\langle X^*_i \right\rangle \left\langle X_a \right\rangle} \left\langle X^*_i \right\rangle \left\langle X_b \right\rangle$$

$$= \frac{\left\langle A''_{a,a} \right\rangle}{\left\langle A^*_{i,a} \right\rangle} \left\langle A^*_{i,b} \right\rangle$$

$$= \frac{\left\langle A''_{a,a} \right\rangle}{\left\langle A^*_{1,a} \right\rangle} \left\langle A^*_{1,b} \right\rangle$$

In the step f), the analyzer may obtain the synchronized beam power ($b''_m$) by using the following equation;

$$b''_m = \overrightarrow{C''_m}^\dagger \left\langle A'' \right\rangle \overrightarrow{C''_m}$$

[Advantageous Effects]

Since measurement performance is determined by the number of high-priced measuring sensors, i.e., microphones when a sound source is measured using the conventional microphone array beamforming method, it is required to increase the number of measuring sensors for the purpose of high measurement performance. However, in the present invention, a sound source is measured by moving a limited number of microphones, so that measurement accuracy can be improved. Particularly, since measurements are simultaneously performed in the conventional microphone array beamforming method, a sound source cannot be measured by moving sensors. However, in the present invention, a sound source is measured by moving microphones, and a signal processing method capable of synchronizing the microphones is applied, thereby obtaining measurement results.

Accordingly, the number of sensors required to evaluate measured values in a range of desired measurement accuracy can be considerably decreased, and therefore, measuring cost can be remarkably saved.

[Description of Drawings]

The above and other objects, features and advantages of the present invention will become apparent from the following description of preferred embodiments given in conjunction with the accompanying drawings, in which:

Fig. 1 illustrates examples of a microphone array measuring method applied to various types of research and development;
Fig. 2 illustrates an accuracy difference in a microphone array measuring method depending on the number of sensors used;
Fig. 3 illustrates arrangements of sensors in verification through numerical simulation;
Fig. 4 illustrates comparison of beam power maps for respective measuring methods; and
Fig. 5 illustrates comparison of performance characteristics in accordance with frequencies for the respective measuring methods.

[Mode for Invention]

Hereinafter, an enhanced sound source localization system and method by using a movable microphone array according to embodiments of the present invention will be described in detail with reference to accompanying drawings.

1) First, like in the conventional microphone array measuring method, sound wave signals generated from an arbitrary sound source is measured using N microphones positioned at difference places, and an ensemble averaged cross spectrum matrix is obtained. Then, the measurement is repeated K times in the state that only one of sensors used is disposed at a fixed position, and the other sensors are moved to new positions. Here, the fixed sensor is numbered by "1", and the obtained cross spectrum is referred to as $<A_{i,j,k}>$. The obtained cross spectrum refers to an ensemble averaged cross spectrum obtained in a $k$-th measurement with respect to an i-th and j-th sensor.

2) Since the obtained cross spectra are not data obtained simultaneously, a difference between phases of the cross spectra exists. In order to correct the difference, a synchronized cross spectrum $<A'_{i,j,k}>$ is calculated as follows by performing correction of phases.

$$\left\langle A'_{i,j,k} \right\rangle = \frac{\left\langle A_{i,j,k} \right\rangle}{\left\langle A_{1,1,k} \right\rangle} \left\langle A_{1,1,1} \right\rangle$$

Here, $<A_{1,1,1}>$ and $<A_{1,1,k}>$ denote auto spectra of the first microphone at first and $k$-th measurements, respectively. Through the correction process using Equation 4, the difference between phases measured at different measurement times can be corrected.

3) The $<A'_{i,j,k}>$ is a three-dimensional matrix of a synchronized [NxNxK] and has data measured at different positions except the first microphone. Therefore, the $<A'_{i,j,k}>$ can be rearranged as a cross spectrum matrix at independent positions as expressed in Equation 5. The cross spectrum matrix becomes a two-dimensional matrix of [(($N$-1)($K$+1)x(($N$-1)$K$+1)].

$$\langle A^{''} \rangle \equiv \begin{bmatrix} A'_{1,1,1} & A'_{2,1,1} & \cdots & A'_{N,1,1} & A'_{2,1,2} & \cdots & A'_{N,1,2} & \cdots & A'_{2,1,K} & \cdots & A'_{N,1,K} \\ A'_{1,2,1} & A'_{2,2,1} & \cdots & A'_{N,2,1} \\ \vdots & \vdots & \ddots & \vdots \\ A'_{1,N,1} & A'_{2,N,1} & \cdots & A'_{N,N,1} \\ A'_{1,2,2} & & & & A'_{2,2,2} & \cdots & A'_{N,2,2} \\ \vdots & & & & \vdots & \ddots & \vdots \\ A'_{1,N,2} & & & & A'_{2,N,2} & \cdots & A'_{N,N,2} \\ \vdots & & & & & & & \ddots \\ A'_{1,2,K} & & & & & & & & A'_{2,2,K} & \cdots & A'_{N,2,K} \\ \vdots & & & & & & & & \vdots & \ddots & \vdots \\ A'_{1,N,K} & & & & & & & & A'_{2,N,K} & \cdots & A'_{N,N,K} \end{bmatrix}$$

When the synchronized three-dimensional $\langle A'_{i,j,k} \rangle$ is rearranged as $\langle A''_{a,b} \rangle$, some terms of the matrix $\langle A''_{a,b} \rangle$, i.e., $A''_{N,l}$, $A''_{N+1,1}$, ... are set as unknown numbers. The terms can be calculated as follows with a diagonal term which is a known term from a first row and a first column, using characteristics of the cross spectrum.

$$\langle A''_{a,b} \rangle = \langle X^*_a \rangle \langle X_b \rangle$$

$$= \frac{\langle X^*_a \rangle \langle X_a \rangle}{\langle X^*_i \rangle \langle X_a \rangle} \langle X^*_i \rangle \langle X_b \rangle$$

$$= \frac{\langle A''_{a,a} \rangle}{\langle A^*_{i,a} \rangle} \langle A^*_{i,b} \rangle$$

$$= \frac{\langle A''_{a,a} \rangle}{\langle A^*_{1,a} \rangle} \langle A^*_{1,b} \rangle$$

4) The cross spectrum matrix obtained as described above has the same result as that obtained from $((N-1)K+1)$ sensors disposed at different positioned. Therefore, one synchronized beam power $b''_m$ can be calculated using the result obtained from independent measurements performed K times. At this time, the synchronized steering vector can be calculated from positions of the moved microphones.

$$\tilde{b}_m = \overrightarrow{C''_m}^{\dagger} \langle A'' \rangle \overrightarrow{C''_m}$$

When the measuring method of the present invention using a movable microphone array is applied, the same measurement accuracy as obtained using a plurality of high-priced sensors can be obtained only using a limited number of sensors. In order to verify that performance of the measuring method of the present invention is more improved than that of the conventional measuring method, the performance of the measuring method of the present invention was compared with that of the conventional measuring method through simulation using a numerical method.

Fig. 3 illustrates arrangements of sensors in verification through numerical simulation. Fig. 3(a) illustrates an arrangement of 31 sensors for measuring using the conventional beamforming method as shown in Fig. 2(a). Fig. 3(b) illustrates an arrangement of 121 sensors for measuring using the conventional beamforming method as shown in Fig. 2(b). Fig. 3(c) illustrates an arrangement of movable 31 sensors for measuring using the measuring method of the present invention.

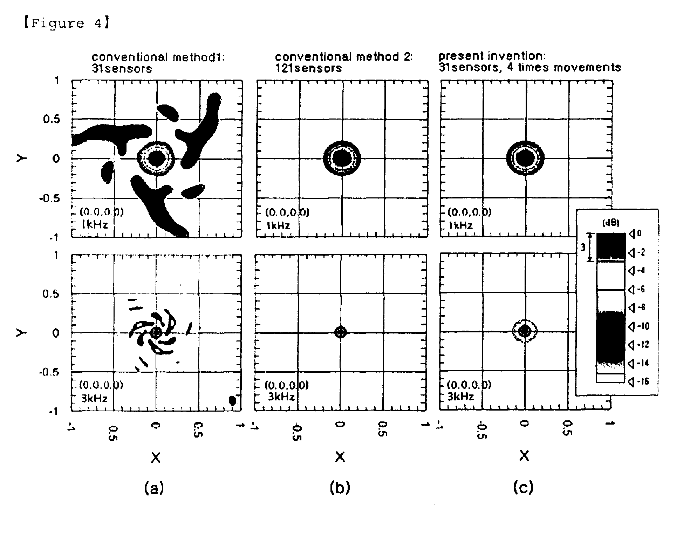

Fig. 4 illustrates numerical simulation results of beam power maps for the respective measuring methods of Fig. 3. As shown in Fig. 4, it can be seen that side-lobe rejections are remarkably improved as the number of sensors used is increased. In the measuring method of the present invention, 31 microphones are substantially used. However, it can be seen that the measuring method of the present invention has a result almost similar to that when 121 sensors are used in the conventional measuring method.

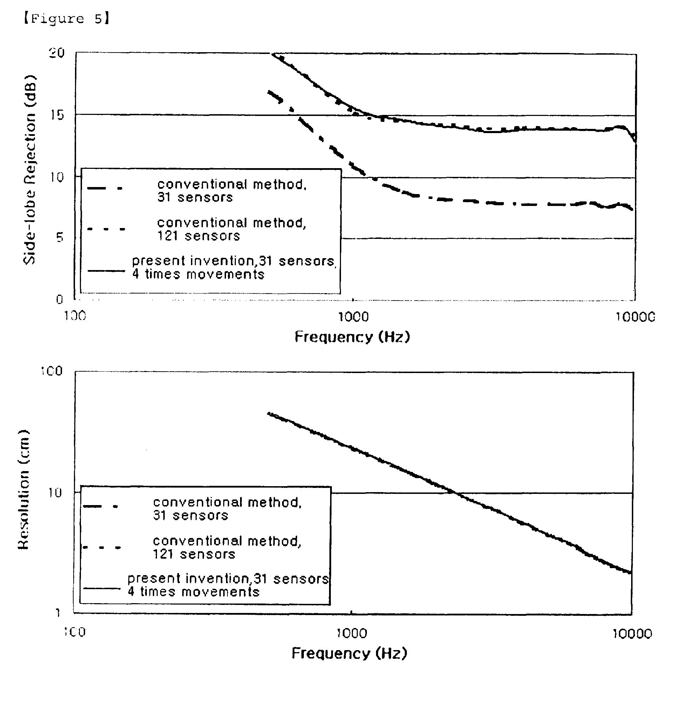

Fig. 5 illustrates graphs for comparison of performance characteristics in accordance with frequencies for the respective measuring methods, in which beam widths and side-lobe rejections are numerically compared for the purpose of numerical comparison of the aforementioned performance improvement. Regarding the entire frequency region of the measured sound, it can be seen that the measured result of the present invention has performance close to that using 121 sensors in the conventional measuring method, even though only 31 sensors are used in the measuring method of the present invention.

Those skilled in the art will appreciate that the conceptions and specific embodiments disclosed in the foregoing description may be readily utilized as a basis for modifying or designing other embodiments for carrying out the same purposes of the present invention. Those skilled in the art will also appreciate that such equivalent embodiments do not depart from the spirit and scope of the invention as set forth in the appended claims.

[Industrial Applicability]

When the measuring method of the present invention using a movable microphone array is applied, the same measurement accuracy as obtained using a plurality of sensors can be obtained only using a small number of sensors, and measurement can be performed at a low cost. Accordingly, it is expected that environmental sound can be reduced as application of a method for reducing sound is extended. Further, the measuring method of the present invention can be extended to various fields through modification of a steering vector in accordance with measurement conditions. Furthermore, the measuring method of the present invention can be applied to localization of a sound source transmitted in the water in addition to a sound source transmitted in the air.

**Claims**

1.　An enhanced sound source localization system, the system comprising:

　　　a fixed sensor measuring a sound at a fixed point;
　　　a plurality of movable sensors spaced apart from the fixed sensor at a predetermined distance to measure the sound at a plurality of measuring points while moving along a predetermined path about the fixed sensor; and
　　　an analyzer receiving sound data measured from the fixed sensor and the movable sensors to perform data analysis, wherein a measured result is obtained by synchronizing the sound data measured from the plurality of movable sensors with the sound data measured from the fixed sensor,
　　　**characterized in that**
　　　the analyzer is configured to:

　　　　　a) obtain an ensemble averaged cross spectrum matrix by using sound data measured from the one fixed sensor and the plurality of movable sensors;
　　　　　b) repeat a predetermined times (K) an operation of moving the movable sensors to new positions, remeasure sound data and obtain an ensemble averaged cross spectrum matrix ($<A_{i,j,k}>$) using the sound data;
　　　　　c) correct a difference of phases in the ensemble averaged cross spectrum matrix ($<A_{i,j,k}>$), thereby obtaining a synchronized cross spectrum matrix ($<A'_{i,j,k}>$);
　　　　　d) rearrange the synchronized cross spectrum matrix ($<A'_{i,j,k}>$) as a cross spectrum matrix ($<A''_{a,b}>$) at independent positions;
　　　　　e) obtain unknown terms in the cross spectrum matrix ($<A''_{a,b}>$) at independent positions by using characteristics of the cross spectrum matrix; and
　　　　　f) obtain a synchronized beam power ($b''_m$) by using the cross spectrum matrix ($<A''_{a,b}>$) at independent positions and a synchronized steering vector matrix ( $\overrightarrow{C''_m}$ ) .

2. An enhanced sound source localization method by using a sound source localization system which comprises a fixed sensor measuring a sound at a fixed point, a plurality of movable sensors spaced apart from the fixed sensor at a predetermined distance to measure the sound at a plurality of measuring points while moving along a predetermined path about the fixed sensor, and an analyzer receiving sound data measured from the fixed sensor and the movable sensors to perform data analysis, wherein a measured result is obtained by synchronizing the sound data measured from the plurality of movable sensors with the sound data measured from the fixed sensor, **characterized in that** the method comprises the steps of:

a) the analyzer obtaining an ensemble averaged cross spectrum matrix by using sound data measured from the one fixed sensor and the plurality of movable sensors;
b) the analyzer repeating a predetermined times ($K$) an operation of moving the movable sensors to new positions, re-measuring sound data and obtaining an ensemble averaged cross spectrum matrix ($<A_{i,j,k}>$) using the sound data;
c) the analyzer correcting a difference of phases in the ensemble averaged cross spectrum matrix ($<A_{i,j,k}>$), thereby obtaining a synchronized cross spectrum matrix ($<A'_{i,j,k}>$) ;
d) the analyzer rearranging the synchronized cross spectrum matrix ($<A'_{i,j,k}>$) as a cross spectrum matrix ($<A''_{a,b}>$) at independent positions;
e) the analyzer obtaining unknown terms in the cross spectrum matrix ($<A''_{a,b}>$) at independent positions by using characteristics of the cross spectrum matrix; and
f) the analyzer obtaining a synchronized beam power ($b''_m$) by using the cross spectrum matrix ($<A''_{a,b}>$) at independent positions and a synchronized steering vector matrix $( \overrightarrow{C''_m} )$ .

3. The method of claim 2, wherein, in the step c), the analyzer obtains the synchronized cross spectrum matrix by using the following equation;

$$\left\langle A'_{i,j,k} \right\rangle = \frac{\left\langle A_{i,j,k} \right\rangle}{\left\langle A_{1,1,k} \right\rangle} \left\langle A_{1,1,1} \right\rangle$$

wherein $i$ and $j$ denote sensor numbers and are variables each having an integer between 1 to $N$ when assuming that the total number of the fixed sensor and the plurality of movable sensors is $N$, and $k$ denotes a measuring time and is a variable having an integer between 1 to $K$.

4. The method of claim 2, wherein, in the step e), the analyzer obtains the unknown terms in the cross spectrum matrix ($<A''_{a,b}>$) at independent positions by using the following equation;

$$\left\langle A_{a,b}^{''}\right\rangle = \left\langle X_a^{\bullet}\right\rangle\left\langle X_b\right\rangle$$

$$= \frac{\left\langle X_a^{\bullet}\right\rangle\left\langle X_a\right\rangle}{\left\langle X_i^{\bullet}\right\rangle\left\langle X_a\right\rangle}\left\langle X_i^{\bullet}\right\rangle\left\langle X_b\right\rangle$$

$$= \frac{\left\langle A_{a,a}^{''}\right\rangle}{\left\langle A_{i,a}^{\bullet}\right\rangle}\left\langle A_{i,b}^{\bullet}\right\rangle$$

$$= \frac{\left\langle A_{a,a}^{''}\right\rangle}{\left\langle A_{1,a}^{\bullet}\right\rangle}\left\langle A_{1,b}^{\bullet}\right\rangle$$

**5.** The method of claim 2, wherein, in the step f), the analyzer obtains the synchronized beam power ($b''_m$) by using the following equation;

$$b''_m = \overrightarrow{C''_m}^{\dagger}\left\langle A''\right\rangle\overrightarrow{C''_m}$$

**Patentansprüche**

**1.** Verbessertes Schallquellenortungssystem, wobei das System umfasst:

einen stationären Sensor, der Schall an einem feststehenden Punkt misst;
eine Mehrzahl beweglicher Sensoren, die von dem stationären Sensor in einem vorherbestimmten Abstand beabstandet sind, um den Schall an einer Mehrzahl von Messpunkten zu messen, während sie sich entlang eines vorherbestimmten Weges um den stationären Sensor bewegen; und
eine Analyseeinrichtung, die Schalldaten empfängt, die von dem stationären Sensor und den beweglichen Sensoren gemessen werden, um eine Datenanalyse durchzuführen, wobei ein Messergebnis durch eine Synchronisierung der von der Mehrzahl von beweglichen Sensoren gemessenen Schalldaten mit den von dem stationären Sensor gemessenen Schalldaten ermittelt wird,
**dadurch gekennzeichnet,**
**dass** die Analyseeinrichtung eingerichtet ist,

a) um eine Ensemble-gemittelte Kreuzspektrums-Matrix unter Verwendung von Schalldaten, die von dem einen stationären Sensor und der Mehrzahl von beweglichen Sensoren gemessen werden, zu erhalten;
b) um eine vorherbestimmte Anzahl (K) von Wiederholungen eines Vorgangs eines Bewegens der beweglichen Sensoren zu neuen Positionen, eines erneuten Messens von Schalldaten und eines Erhaltens einer Ensemble-gemittelten Kreuzspektrums-Matrix ($<A_{i,j,k}>$) unter Verwendung der Schalldaten auszuführen;
c) um eine Differenz von Phasen in der Ensemble-gemittelten Kreuzspektrums-Matrix ($<A_{i,j,k}>$) zu korrigieren, wodurch eine synchronisierte Kreuzspektrums-Matrix ($<A'_{i,j,k}>$) erhalten wird;
d) um die synchronisierte Kreuzspektrums-Matrix ($<A'_{i,j,k}>$) als eine Kreuzspektrums-Matrix ($<A''_{a,b}>$) an unabhängigen Positionen umzuordnen;
e) um unbekannte Ausdrücke in der Kreuzspektrums-Matrix ($<A''_{a,b}>$) an unabhängigen Positionen unter Verwendung von Eigenschaften der Kreuzspektrums-Matrix zu erhalten; und
f) um eine synchronisierte Strahlleistung ($b''_m$) unter Verwendung der Kreuzspektrums-Matrix ($<A''_{a,b}>$) an unabhängigen Positionen und einer synchronisierten Steering-Vektor-Matrix ($\overrightarrow{C''_m}$) zu erhalten.

**2.** Verbessertes Schallquellenortungsverfahren und Verwendung eines Schallquellenortungssystems, welches einen stationären Sensor, der Schall an einem feststehenden Punkt misst, eine Mehrzahl beweglicher Sensoren, die von dem stationären Sensor in einem vorherbestimmten Abstand beabstandet sind, um den Schall an einer Mehrzahl von Messpunkten zu messen, während sie sich entlang eines vorherbestimmten Weges um den stationären Sensor bewegen, und eine Analyseeinrichtung umfasst, die Schalldaten empfängt, die von dem stationären Sensor und den beweglichen Sensoren gemessen werden, um eine Datenanalyse durchzuführen, wobei ein Messergebnis durch eine Synchronisierung der von der Mehrzahl von beweglichen Sensoren gemessenen Schalldaten mit den von dem stationären Sensor gemessenen Schalldaten ermittelt wird,
**dadurch gekennzeichnet,**
**dass** das Verfahren die Schritte umfasst:

a) Erhalten einer Ensemble-gemittelte Kreuzspektrums-Matrix durch die Analyseeinrichtung unter Verwendung von Schalldaten, die von dem einen stationären Sensor und der Mehrzahl von beweglichen Sensoren gemessen werden;

b) Ausführen einer vorherbestimmten Anzahl (K) von Wiederholungen eines Vorgangs eines Bewegens der beweglichen Sensoren zu neuen Positionen, eines erneuten Messens von Schalldaten und eines Erhaltens einer Ensemble-gemittelten Kreuzspektrums-Matrix ($<A_{i,j,k}>$) unter Verwendung der Schalldaten durch die Analyseeinrichtung;

c) Korrigieren einer Differenz von Phasen in der Ensemble-gemittelten Kreuzspektrums-Matrix ($<A_{i,j,k}>$) durch die Analyseeinrichtung, wodurch eine synchronisierte Kreuzspektrums-Matrix ($<A'_{i,j,k}>$) erhalten wird;

d) Umordnen der synchronisierten Kreuzspektrums-Matrix ($<A'_{i,j,k}>$) als eine Kreuzspektrums-Matrix ($<iA''_{a,b}>$) an unabhängigen Positionen durch die Analyseeinrichtung;

e) Erhalten unbekannter Ausdrücke in der Kreuzspektrums-Matrix ($<A''_{a,b}>$) an unabhängigen Positionen unter Verwendung von Eigenschaften der Kreuzspektrums-Matrix durch die Analyseeinrichtung; und

f) Erhalten einer synchronisierten Strahlleistung ($b''_m$) durch die Analyseeinrichtung unter Verwendung der Kreuzspektrums-Matrix ($<A''_{a,b}>$) an unabhängigen Positionen und einer synchronisierten Steering-Vektor-Matrix ($\overrightarrow{C''_m}$) .

**3.** Verfahren nach Anspruch 2, wobei die Analyseeinrichtung in dem Schritt c) die synchronisierte Kreuzspektrums-Matrix unter Verwendung der folgenden Formel erhält;

$$\left\langle A'_{i,j,k} \right\rangle = \frac{\left\langle A_{i,j,k} \right\rangle}{\left\langle A_{1,1,k} \right\rangle}\left\langle A_{1,1,1} \right\rangle$$

wobei i und j Sensornummern bezeichnen und Variablen sind, die jeweils einen ganzzahligen Wert von 1 bis N annehmen, wenn man annimmt, dass die Gesamtanzahl des stationären Sensors und der Mehrzahl beweglicher Sensoren N ist, und $k$ eine Messzeit bezeichnet und eine Variable mit einem ganzzahligen Wert von 1 bis $K$ ist.

**4.** Verfahren nach Anspruch 2, wobei die Analyseeinrichtung in dem Schritt e) die unbekannten Ausdrücke in der Kreuzspektrums-Matrix ($<A''_{a,b}>$) an unabhängigen Positionen unter Verwendung der folgenden Gleichung erhält;

$$\left\langle A_{a,b}^{''} \right\rangle = \left\langle X_a^* \right\rangle \left\langle X_b \right\rangle$$

$$= \frac{\left\langle X_a^* \right\rangle \left\langle X_a \right\rangle}{\left\langle X_i^* \right\rangle \left\langle X_a \right\rangle} \left\langle X_i^* \right\rangle \left\langle X_b \right\rangle$$

$$= \frac{\left\langle A_{a,a}^{''} \right\rangle}{\left\langle A_{i,a}^* \right\rangle} \left\langle A_{i,b}^* \right\rangle$$

$$= \frac{\left\langle A_{a,a}^{''} \right\rangle}{\left\langle A_{1,a}^* \right\rangle} \left\langle A_{1,b}^* \right\rangle$$

**5.** Verfahren nach Anspruch 2, wobei die Analyseeinrichtung in dem Schritt f) die synchronisierte Strahlleistung (b"$_m$) unter Verwendung der folgenden Gleichung erhält;

$$b_m^{''} = \overrightarrow{C_m^{''}}^{\dagger} \left\langle A^{''} \right\rangle \overrightarrow{C_m^{''}}$$

**Revendications**

1.  Système amélioré de localisation de source sonore, le système comprenant :

    un capteur fixe mesurant un son au niveau d'un point fixe ;
    une pluralité de capteurs mobiles espacés du capteur fixe à une distance prédéterminée pour mesurer le son à une pluralité de points de mesure tout en se déplaçant suivant un parcours prédéterminé autour du capteur fixe ; et
    un analyseur recevant des données sonores mesurées à partir du capteur fixe et des capteurs mobiles pour effectuer une analyse de données, dans lequel un résultat mesuré est obtenu en synchronisant les données sonores mesurées à partir de la pluralité de capteurs mobiles avec les données sonores mesurées à partir du capteur fixe,
    **caractérisé en ce que**
    l'analyseur est configuré pour :

    a) obtenir une matrice inter-spectre en moyenne d'ensemble en utilisant des données sonores mesurées à partir du capteur fixe et de la pluralité de capteurs mobiles ;
    b) répéter un nombre de fois prédéterminé (K) une opération de déplacement des capteurs mobiles jusqu'à de nouvelles positions, remesurer des données sonores et obtenir une matrice inter-spectre en moyenne d'ensemble ($<A_{i,j,k}>$) en utilisant des données sonores ;
    c) corriger une différence de phases dans la matrice inter-spectre en moyenne d'ensemble ($<A_{i,j,k}>$), en obtenant ainsi une matrice inter-spectre synchronisée ($<A'_{i,j,k}>$) ;
    d) réorganiser la matrice inter-spectre synchronisée ($<A'_{i,j,k}>$) comme une matrice inter-spectre ($<A''_{a,b}>$) à des positions indépendantes ;
    e) obtenir des termes inconnus dans la matrice inter-spectre ($<A''_{a,b}>$) à des positions indépendantes en utilisant des caractéristiques de la matrice inter-spectre ; et
    f) obtenir une puissance de faisceau synchronisée (b"$_m$) en utilisant la matrice inter-spectre ($<A''_{a,b}>$) à des positions indépendantes et une matrice vectorielle de direction synchronisée $\left( \vec{C}_m^{''} \right)$ .

**2.** Procédé amélioré de localisation de source sonore en utilisant un système de localisation de source sonore qui comprend un capteur fixe mesurant un son au niveau d'un point fixe, une pluralité de capteurs mobiles espacés du capteur fixe à une distance prédéterminée pour mesurer le son à une pluralité de points de mesure tout en se déplaçant suivant un parcours prédéterminé autour du capteur fixe, et un analyseur recevant des données sonores mesurées à partir du capteur fixe et des capteurs mobiles pour effectuer une analyse de données, dans lequel un résultat mesuré est obtenu en synchronisant les données sonores mesurées à partir de la pluralité de capteurs mobiles avec les données sonores mesurées à partir du capteur fixe,

**caractérisé en ce que**

le procédé comprend les étapes suivantes :

a) le fait que l'analyseur obtienne une matrice inter-spectre en moyenne d'ensemble en utilisant des données sonores mesurées à partir du capteur fixe et de la pluralité de capteurs mobiles ;

b) le fait que l'analyseur répète un nombre de fois prédéterminé (K) une opération de déplacement des capteurs mobiles jusqu'à de nouvelles positions, remesure des données sonores et obtienne une matrice inter-spectre en moyenne d'ensemble ($<A_{i,j,k}>$) en utilisant les données sonores ;

c) le fait que l'analyseur corrige une différence de phases dans la matrice inter-spectre en moyenne d'ensemble ($<A_{i,j,k}>$), en obtenant ainsi une matrice inter-spectre synchronisée ($<A'_{i,j,k}>$) ;

d) le fait que l'analyseur réorganise la matrice inter-spectre synchronisée ($<A'_{i,j,k}>$) comme une matrice inter-spectre ($<A''_{a,b}>$) à des positions indépendantes ;

e) le fait que l'analyseur obtienne des termes inconnus dans la matrice inter-spectre ($<A''_{a,b}>$) à des positions indépendantes en utilisant des caractéristiques de la matrice inter-spectre ; et

f) le fait que l'analyseur obtienne une puissance de faisceau synchronisée ($b''_m$) en utilisant la matrice inter-spectre ($<A''_{a,b}>$) à des positions indépendantes et une matrice vectorielle de direction synchronisée $\left( \bar{C}''_m \right)$.

**3.** Procédé selon la revendication 2, dans lequel, dans l'étape c), l'analyseur obtient la matrice inter-spectre synchronisée en utilisant l'équation suivante :

$$\left\langle A'_{i,j,k} \right\rangle = \frac{\left\langle A_{i,j,k} \right\rangle}{\left\langle A_{1,1,k} \right\rangle} \left\langle A_{1,1,1} \right\rangle$$

où i et j désignent des nombres de capteurs et sont des variables ayant chacune un entier entre 1 et N en supposant que le nombre total du capteur fixe et de la pluralité de capteurs mobiles est N, et k désigne un temps de mesure et est une variable ayant un entier compris entre 1 et K.

**4.** Procédé selon la revendication 2, dans lequel, dans l'étape e), l'analyseur obtient les termes inconnus dans la matrice inter-spectre ($<A''_{a,b}>$) à des positions indépendantes en utilisant l'équation suivante :

$$\left\langle A''_{a,b} \right\rangle = \left\langle X^{\bullet}_a \right\rangle \left\langle X_b \right\rangle$$

$$= \frac{\left\langle X^{\bullet}_a \right\rangle \left\langle X_a \right\rangle}{\left\langle X^{\bullet}_i \right\rangle \left\langle X_a \right\rangle} \left\langle X^{\bullet}_i \right\rangle \left\langle X_b \right\rangle$$

$$= \frac{\left\langle A''_{a,a} \right\rangle}{\left\langle A^{\bullet}_{i,a} \right\rangle} \left\langle A^{\bullet}_{i,b} \right\rangle$$

$$= \frac{\left\langle A''_{a,a} \right\rangle}{\left\langle A^{\bullet}_{1,a} \right\rangle} \left\langle A^{\bullet}_{1,b} \right\rangle$$

**5.** Procédé selon la revendication 2, dans lequel, dans l'étape f), l'analyseur obtient la puissance de faisceau synchronisée (b"$_m$) en utilisant l'équation suivante :

$$b''_m = \overrightarrow{C''_m}{}^\dagger \langle A'' \rangle \overrightarrow{C''_m}$$

【Figure 1】

Boeing 777 flight test          Engine Inlet Noise

"Phased Array Beamforming for Aeroacoustics", AIAA Short Course, 2003

Jet Noise

Landing Gear Noise

"Phased Array Beamforming
for Aeroacoustics",
AIAA Short Course, 2003

"Boeing 18-Inch Fan
Rig Broadband Noise Test",
NASA/CR-1998-208704

Flap Noise Study in Wind-tunnel

Jet Noise Study in Wind-tunnel

"Source location by phased array
measurements in closed wind tunnel
test sections", NLR-TP-99108

"Location of rotating sources by
phased array measurements",
NLR-TP-2001-135

Engine Noise Study in Wind-tunnel  Flap Noise Study in Wind-tunnel

【Figure 2】

(a)

(b)

【Figure 3】

(a)

(b)

(c)

【Figure 4】

(a)  (b)  (c)

[Figure 5]

**EP 2 201 564 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58162878 A